# FASCICULE DE BREVET EUROPEEN

(11) **EP 0 949 092 B1**
(45) Date de publication et mention de la délivrance du brevet: **06.03.2002**
(21) Numéro de dépôt: 99400720.1
(22) Date de dépôt: 24.03.1999
(51) Int. Cl.: B60D 1/04, B60R 19/34, B60D 1/50, F16F 7/12, B60R 19/36

(54) **Pare-chocs de véhicule automobile**
Stossdämpfer für Kraftfahrzeug
Bumper for motor vehicle

(30) Priorité: 09.04.1998 FR 9804488; 09.04.1998 FR 9804490
(43) Date de publication de la demande: 13.10.1999
(73) Titulaire: AUTOMOBILES PEUGEOT, 75116 Paris (FR); AUTOMOBILES CITROEN, 92200 Neuilly-sur-Seine (FR)
(72) Inventeur: Amdaoud, Rachid, 78100 St. Germain en Laye (FR); Masson, Patrick, 92500 Rueil-Malmaison (FR)
(74) Mandataire: Lanceplaine, Jean-Claude

(56) Documents cités:
- EP-A- 0 793 035
- EP-A- 0 794 350
- DE-A- 19 616 944
- FR-A- 2 357 392
- US-A- 3 998 485
- US-A- 4 272 114
- US-A- 4 309 970
- US-A- 5 630 605

## Description

La présente invention a pour objet un pare-chocs pour véhicule automobile.

Les véhicules automobiles peuvent subir des chocs plus ou moins violents qui peuvent être la cause de blessures pour les occupants et même entraîner la mort de ceux-ci.

Les chocs se produisent soit à l'avant ou à l'arrière du véhicule, soit sur les côtés, c'est à dire au niveau des portières.

Pour minimiser les chocs que subissent les occupants, les constructeurs utilisent de plus en plus des éléments d'absorption d'énergie disposés à l'avant ou à l'arrière et dans les portières du véhicule et les pare-chocs doivent répondre à des normes techniques notamment en ce qui concerne la résistance aux chocs.

Pour essayer de satisfaire à ces critères, de nombreuses solutions ont été mises en oeuvre jusqu'à présent, mais elles sont onéreuses du fait de leur complexité ou ne satisfont pas toutes les normes.

Une des solutions envisagée par les constructeurs consiste à intégrer dans les pare-chocs de la mousse.

Mais cette mousse ne possède pas une capacité d'absorption suffisante en cas de choc relativement violent.

Une autre solution consiste à disposer entre le pare-chocs et chaque longeron du véhicule un vérin qui présente l'inconvénient d'être onéreux et d'un poids élevé.

On connaît également dans le DE-A-19616944 un pare-chocs de véhicule automobile, du type comprenant une poutre reliée à chaque longeron de la structure du véhicule par une contre-lame. Un absorbeur d'énergie formé par une pièce de profil évasé à sections étagées est interposé entre l'extrémité de chaque longeron et la poutre.

L'invention a pour but de proposer un pare-chocs pour véhicule automobile qui permet d'absorber des chocs situés dans une large gamme de vitesse et avec différents angles d'incidence.

L'invention a donc pour objet un pare-chocs de véhicule automobile, du type comprenant une poutre reliée à chaque longeron de la structure du véhicule par une contre-lame, un absorbeur d'énergie formé par une pièce de profil évasé à sections étagées est interposé entre l'extrémité de chaque longeron et la poutre, caractérisé en ce que ladite pièce comportant au moins une nervure de renfort s'étendant le long d'une génératrice de l'enveloppe conique.

Selon d'autres caractéristiques de l'invention :
- le profil évasé de la pièce forme une enveloppe conique et présente une série d'étages cylindriques de diamètre croissant d'une extrémité à l'autre de ladite pièce,
- la pièce comporte trois nervures de renfort s'étendant chacune le long d'une génératrice de l'enveloppe conique et uniformément réparties sur ladite enveloppe,
- la pièce comporte, à son extrémité de plus grande section, une plaque de fixation sur le longeron correspondant,
- l'extrémité de plus petite section de la pièce est en appui sur la poutre,
- au moins une pièce est munie d'un organe d'accrochage pour le remorquage du véhicule,
- l'organe d'accrochage est fixé de manière amovible sur l'extrémité de plus petite section de la pièce par des moyens de liaison,
- les moyens de liaison comprennent, d'une part, une entretoise montée à l'intérieur de la pièce et comportant un épaulement en appui contre la paroi transversale de raccordement entre l'étage de plus petite section à l'étage adjacent et, d'autre part, une douille fixée sur l'épaulement et sur la paroi transversale d'extrémité de l'étage de plus petite section,
- la douille comporte un taraudage de réception d'une extrémité filetée de l'organe d'accrochage,
- la poutre comporte, au droit de chaque pièce, un évidement dont la largeur, dans l'axe du véhicule, est égale ou inférieure à l'épaisseur résiduelle périphérique de la pièce comprimée après un choc,
- la hauteur de la poutre est supérieure au diamètre de l'étage de plus grande section de la pièce,
- chaque contre-lame est déformable sous une force inférieure à la force de déformation de la pièce correspondante,
- la pièce est en acier et réalisée par emboutissage.

D'autres caractéristiques et avantages de l'invention apparaîtront au cours de la description qui va suivre, donnée uniquement à titre d'exemple et faite en référence aux dessins annexés, sur lesquels :
- la Fig. 1 est une vue schématique en perspective d'un pare-chocs avant d'un véhicule automobile,
- la Fig. 2 est une vue en perspective d'un premier mode de réalisation d'un absorbeur d'énergie équipant le pare-chocs,
- la Fig. 3 est une vue en perspective d'un second mode de réalisation d'un absorbeur d'énergie équipant un pare-chocs,
- la Fig. 4, est une vue en perspective de l'absorbeur d'énergie après un choc conforme à l'invention,
- la Fig. 5 est une vue schématique en perspective d'une variante du pare-chocs,
- la Fig. 6 est une vue en perspective d'un absorbeur d'énergie équipant le pare-chocs représenté à la Fig. 5.

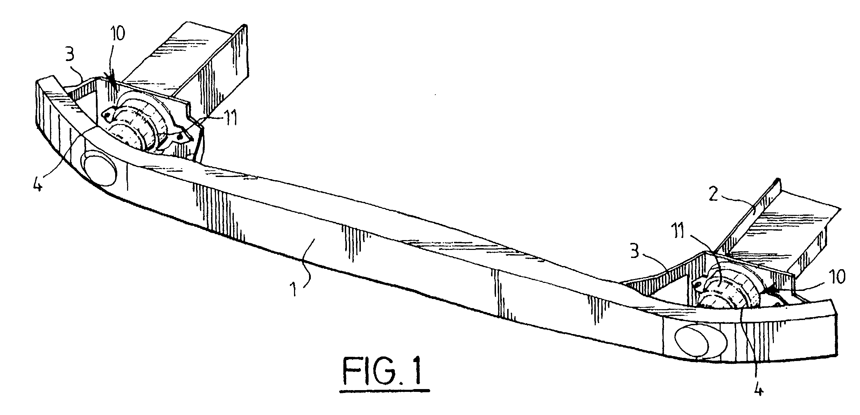

Sur la Fig.1, on a représenté schématiquement un pare-chocs 1 fixé sur l'extrémité avant des longerons 2 de la structure du véhicule automobile chacun au moyen d'une contre-lame 3.

Entre l'extrémité avant de chaque longeron 2 et la poutre 1 du pare-chocs est interposé un absorbeur d'énergie désigné dans son ensemble par la référence 10.

D'une manière générale, l'absorbeur d'énergie 10 est formé par une pièce 11 de profil évasé et comportant une succession de sections étagées.

De préférence, le profil évasé de la pièce 11 forme une enveloppe conique et les sections étagées sont formées par une série d'étages cylindriques 12a, 12b...12e de diamètre croissant d'une extrémité à l'autre de la pièce 11.

Dans l'exemple de réalisation représenté sur les figures, la pièce 11 comporte cinq étages cylindriques 12a, 12b...12e de diamètre croissant.

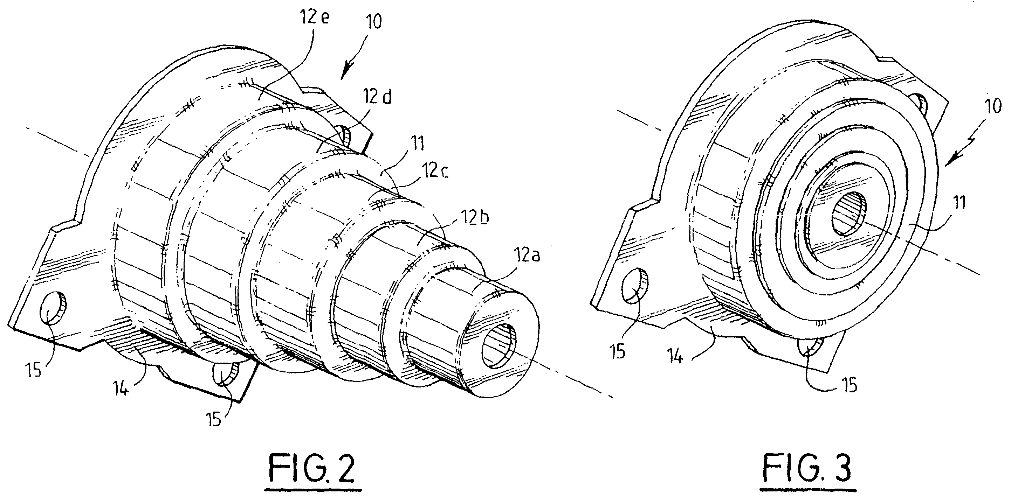

Selon une variante représentée à la Fig. 3, la pièce 11 comporte au moins une nervure de renfort 13 s'étendant le long d'une génératrice de l'enveloppe conique formée par ladite pièce 11.

Dans l'exemple de réalisation représenté à la Fig. 3, la pièce 11 comporte trois nervures de renfort 13 s'étendant chacune le long d'une génératrice de l'enveloppe conique et uniformément réparties sur ladite enveloppe.

La pièce 11 comporte, à son extrémité de plus grande section, une plaque 14 de fixation sur le longeron 2 correspondant.

Cette plaque 14 comporte des orifices 15 de passage d'organes de fixation, non représentés, de la pièce 11 sur l'extrémité du longeron 2.

La pièce 11 est de préférence en acier et réalisée par emboutissage.

Ainsi que représenté à la Fig. 1, le pare-chocs 1 est fixé sur l'extrémité avant de chaque longeron 2 de la structure du véhicule automobile au moyen d'une contre-lame 3.

L'extrémité de plus grande section de la pièce 11 de l'absorbeur d'énergie 10 est fixée par l'intermédiaire de la plaque 14 sur l'extrémité avant du longeron 2 correspondant et l'extrémité de plus petite section de ladite pièce 11 est en appui sur la poutre 1 du pare-chocs.

Ainsi, cette poutre 1 est en appui simple sur la pièce 11 de chaque absorbeur d'énergie 10, sans liaison directe de façon à éviter d'engendrer des efforts transversaux trop importants en cas de chocs survenant avec un angle d'incidence non nul.

Dans le même but, la section de l'étage 12a de chaque pièce 11 en contact avec la poutre 1 doit être suffisamment faible pour permettre une certaine rotation de la pièce 11 de chaque absorbeur d'énergie par rapport à ladite poutre 1, sous un effort incident.

Par ailleurs, la pièce 11 de chaque absorbeur d'énergie est fixée sur le longeron 2 correspondant de telle manière que le barycentre de l'étage 12e de plus grand diamètre coïncide avec celui de la section dudit longeron.

La dimension et l'épaisseur de la plaque 14 sont choisies de façon à obtenir une répartition homogène de l'effort sur le longeron 2 correspondant.

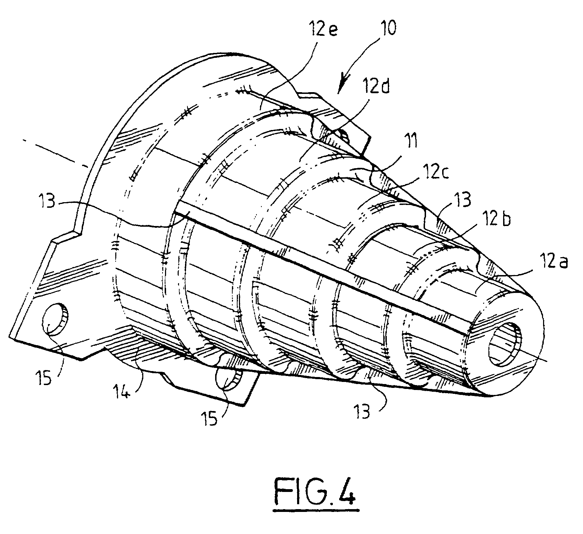

En cas de chocs, les étages 12a, 12b...12e de diamètre croissant s'emboîtent successivement les uns dans les autres par retournement de la portion de chaque étage, comme représenté à la Fig. 4.

Ainsi que montré à la Fig. 1, la poutre 1 du pare-chocs comporte, au droit de chaque absorbeur d'énergie 10, un évidement 4 dont la largeur, dans l'axe du véhicule, est égale ou inférieure, à l'épaisseur résiduelle périphérique de l'absorbeur d'énergie 10 comprimé après un choc.

La hauteur de la poutre est supérieure au diamètre de l'étage de plus grande section de l'absorbeur d'énergie.

De cette façon on évite toute interférence entre la poutre 1 et les absorbeurs d'énergie 10 au cours du choc.

En effet, une telle interférence provoquerait un travail en parallèle de ces éléments susceptible de créer un cumule néfaste des raideurs.

Pour la même raison, les contre-lames 3 sont dimensionnées peur flamber très rapidement afin de ne pas perturber le fonctionnement de l'absorbeur d'énergie 10.

De préférence, chaque contre-lame 3 est déformable sous une force inférieure à la force de déformation de l'absorbeur d'énergie 10 correspondant.

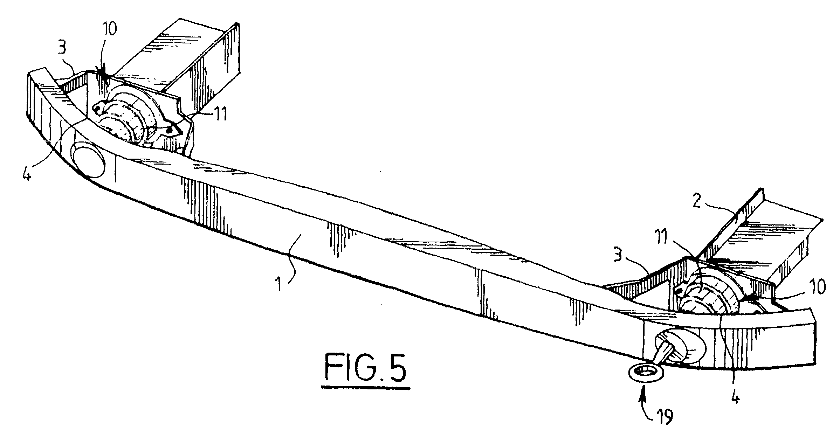

Selon un autre mode de réalisation représenté à la Fig. 5, le pare-chocs est équipé d'un système d'attelage pour le remorquage du véhicule.

Ce système d'attelage comprend un organe d'accrochage 19 formé par exemple par un anneau monté sur un absorbeur d'énergie 10.

L'organe d'accrochage 19 est fixé de manière amovible sur l'extrémité de plus petite section de la pièce 11 par des moyens de liaison 20.

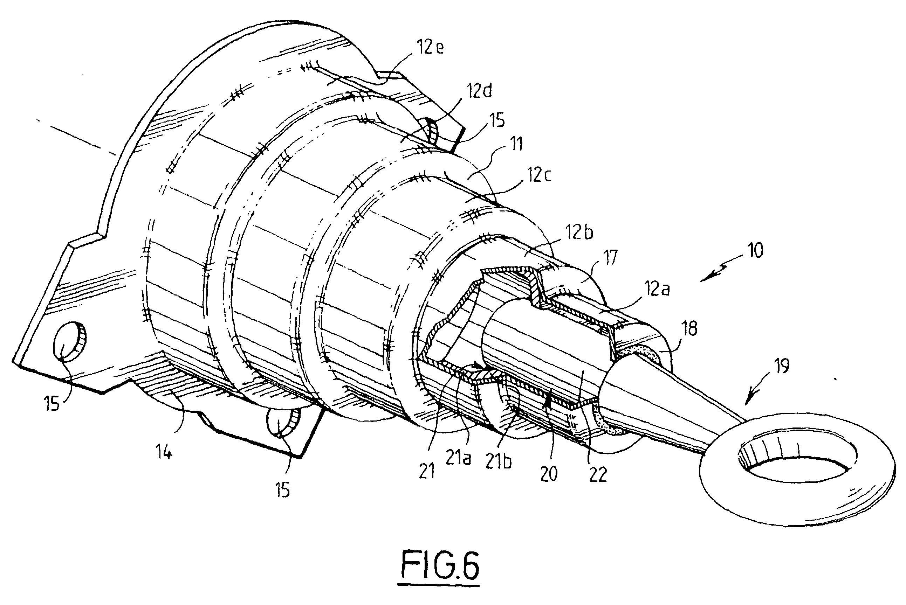

Comme représenté à la Fig. 6, les moyens de liaison 20 comprennent une entretoise 21 comportant une partie cylindrique 21a montée à l'intérieur du second étage 12b de la pièce 11 et un épaulement 21b en appui contre la paroi transversale 17 de raccordement entre l'étage 12a de petite section et l'étage adjacent 12b.

Les moyens 20 de liaison comprennent également une douille 22 qui traverse l'épaulement 21b de l'entretoise 21 et la paroi transversale 18 d'extrémité de l'étage 14a de plus petite section.

La douille 22 est fixée par exemple par soudage sur l'entretoise 21 et sur la paroi transversale 18 et comporte un taraudage de réception d'une extrémité filetée de l'organe d'accrochage 19.

Ainsi, l'organe d'accrochage peut être facilement monté ou démonté de la douille 22.

Dans ce cas également lors de chocs sur la poutre 1 ou sur l'organe d'accrochage 19, la pièce 11 formant l'absorbeur d'énergie 10 se déforme progressivement par emboîtement successif les uns dans les autres des étages 12a, 12b...12e et par retournement de la portion de chaque étage en entraînant l'organe d'accrochage 19.

En effet, l'entretoise 21 sert de guide et renvoi d'effort de façon que la déformation reste parallèle à l'axe de l'absorbeur 10, même si les forces obliquent lui sont appliquées.

En cas de chocs, le recul de l'organe d'accrochage 19 est absorbé par l'absorbeur d'énergie 10 ce qui permet d'éviter des dommages aux éléments situés derrière l'organe d'accrochage.

La pièce 11 est en acier et réalisée par emboutissage.

Le pare-chocs selon l'invention permet d'obtenir une déformation progressive même avec des angles d'incidence de chocs non nulles.

## Revendications

1. Pare-chocs de véhicule automobile, du type comprenant une poutre (1) reliée à chaque longeron (2) de la structure du véhicule par une contre-lame (3), un absorbeur d'énergie (10) formé par une pièce (11) de profil évasé à sections étagées est interposé entre l'extrémité de chaque longeron (2) et la poutre (1), **caractérisé en ce que** ladite pièce (11) comportant au moins une nervure de renfort (13) s'étendant le long d'une génératrice de l'enveloppe conique.

2. Pare-chocs selon la revendication 1, **caractérisé en ce que** le profil évasé de la pièce (11) forme une enveloppe conique et présente une série d'étages cylindriques (12a, 12b...12e) de diamètre croissant d'une extrémité à l'autre de ladite pièce (11).

3. Pare-chocs selon la revendication 1 ou 2, **caractérisé en ce que** la pièce (11).comporte trois nervures de renfort (13) s'étendant chacune le long d'une génératrice de l'enveloppe conique et uniformément réparties sur ladite enveloppe.

4. Pare-chocs selon l'une quelconque des revendications précédentes, **caractérisé en ce que** la pièce (11) comporte, à son extrémité de plus grande section, une plaque de fixation (14) sur le longeron (2) correspondant.

5. Pare-chocs selon l'une quelconque des revendications précédentes, **caractérisé en ce que** l'extrémité de plus petite section de la pièce (11) est en appui sur la poutre (1).

6. Pare-chocs selon l'une quelconque des revendications précédentes, **caractérisé en ce qu'**au moins une pièce (11) est munie d'un organe d'accrochage (19) pour le remorquage du véhicule.

7. Pare-chocs selon l'une quelconque des revendications précédentes, **caractérisé en ce que** l'organe d'accrochage (20) est fixé de manière amovible sur l'extrémité de plus petite section de la pièce (11) par des moyens de liaison(20).

8. Pare-chocs selon les revendication 7, **caractérisé en ce que** les moyens de liaison (20) comprennent, d'une part, une entretoise (21) montée à l'intérieur de la pièce (13) et comportant un épaulement (21b) en appui contre la paroi transversale (17) de raccordement entre l'étage (14a) de plus petite section et l'étage (14b) adjacent et, d'autre part, une douille (22) fixée sur l'épaulement (21b) et sur la paroi transversale (18) d'extrémité de l'étage (14a) de plus petite section.

9. Pare-chocs selon la revendication 8, **caractérisé en ce que** la douille (22) comporte un taraudage de réception d'une extrémité filetée de l'organe d'accrochage (11).

10. Pare-chocs selon les revendications 1 et 2, **caractérisé en ce que** la poutre (1) comporte, au droit de chaque pièce (11), un évidement (4) dont la largeur, dans l'axe du véhicule, est égale ou inférieure à l'épaisseur résiduelle périphérique de la pièce (11) comprimée après un choc.

11. Pare-chocs selon la revendication 6, **caractérisé en ce que** chaque contre-lame (3) est déformable sous une force inférieure à la force de déformation de la pièce (11) correspondante.

12. Pare-chocs selon l'une quelconque des revendications précédentes, **caractérisé en ce que** la pièce (11) est en acier et réalisée par emboutissage.

## Patentansprüche

1. Fahrzeugstoßfänger, welcher aufweist: eine Stange (1), die mittels eines Gegenhalters (3) mit jedem Längsträger (2) des Fahrzeugrahmens verbunden ist, einen zwischen dem Ende jedes Längsträgers (2) und der Stange (1) angeordneten Energieabsorber (10), welcher von einem Profilstück (11) geformt wird, das in gestuften Abschnitten erweitert ist, **dadurch gekennzeichnet, dass** das Stück (11) mindestens eine Verstärkungsrippe (13) aufweist, welche sich längs einer Mantellinie der konischen Einhüllenden erstreckt.

2. Fahrzeugstoßfänger nach Anspruch 1, **dadurch gekennzeichnet, dass** das erweiterte Profil des Stückes (11) eine konische Einhüllende formt und eine zylindrische Stufenreihe zunehmenden Durchmessers von einem Ende zum anderen Ende des Stückes (11) darstellt.

3. Fahrzeugstoßfänger nach Anspruch 1 oder 2, **dadurch gekennzeichnet, dass** das Stück (11) drei Verstärkungsrippen (13) aufweist, von der sich jede längs einer Mantellinie der konischen Einhüllenden erstreckt und die sich gleichförmig auf der Einhüllenden verteilen.

4. Fahrzeugstoßfänger nach einem der vorhergehenden Ansprüche, **dadurch gekennzeichnet, dass** das Stück (11) an seinem Ende des größten Abschnittes eine Befestigungsplatte (14) auf dem zugehörigen Längsträger (2) aufweist.

5. Fahrzeugstoßfänger nach einem der vorhergehenden Ansprüche, **dadurch gekennzeichnet, dass** das Ende des kleinsten Abschnittes des Stückes (11) in Anlage mit der Stange (1) ist.

6. Fahrzeugstoßfänger nach einem der vorhergehenden Ansprüche, **dadurch gekennzeichnet, dass** mindestens ein Stück (11) mit einer Einhängevorrichtung (19) für das Abschleppen des Fahrzeugs versehen ist.

7. Fahrzeugstoßfänger nach einem der vorhergehenden Ansprüche, **dadurch gekennzeichnet, dass** die Einhängevorrichtung (19) lösbar an dem Ende des kleinsten Abschnittes des Stückes (11) mit Verbindungsmitteln (20) befestigt ist.

8. Fahrzeugstoßfänger nach Anspruch 7, **dadurch gekennzeichnet, dass** die Verbindungsmittel (20) zum einen eine Distanzhülse (21) aufweisen, welche im Inneren des Stückes (11) montiert ist und eine Schulter (21b) hat, die in Anlage gegen die Verbindungsquerwand (17) zwischen der Stufe (12a) des kleinsten Abschnittes und der angrenzenden Stufe (12b) ist, und die zum anderen aufweisen eine Buchse (22), die an der Schulter (21b) und an der Abschlussquerwand (18) der Stufe (12a) des kleinsten Abschnittes befestigt ist.

9. Fahrzeugstoßfänger nach Anspruch 8, **dadurch gekennzeichnet, dass** die Buchse (22) mit einem Innengewinde zur Aufnahme eines mit einem Außengewinde versehenen Ende der Einhängevorrichtung (19) versehen ist.

10. Fahrzeugstoßfänger nach Anspruch 1 und 2, **dadurch gekennzeichnet, dass** die Stange (1) bei jedem Stück (11) eine Ausbuchtung (4) aufweist, deren Breite in der Fahrzeugachse gleich oder kleiner ist als die verbleibende umfängliche Dicke des nach einem Stoß komprimierten Stückes (11).

11. Fahrzeugstoßfänger nach Anspruch 6, **dadurch gekennzeichnet, dass** jeder Gegenhalter (3) durch eine Kraft deformierbar ist, welche niedriger ist als die Kraft zur Deformation des zugehörigen Stückes (11).

12. Fahrzeugstoßfänger nach einem der vorhergehenden Ansprüche, **dadurch gekennzeichnet, dass** das Stück (11) aus Stahl ist und durch Ziehen hergestellt ist.

## Claims

1. Bumper for a motor vehicle, of the type comprising a beam (1) connected to each side member (2) of the vehicle structure by a counter-piece (3), an energy absorber (10) formed by a part (11) having a flared profile with stepped sections which is interposed between the end of each side member (2) and the beam (1), **characterised in that** the part (11) comprises at least one reinforcing rib (13) and extends along a generatrix of the conical envelope.

2. Bumper according to claim 1, **characterised in that** the flared profile of the part (11) forms a conical envelope and has a series of cylindrical steps (12a, 12b...12e) increasing in diameter from one end of said part (11) to the other.

3. Bumper according to claim 1 or 2, **characterised in that** the part (11) has three reinforcing ribs (13) each extending along a generatrix of the conical envelope and uniformly distributed over said envelope.

4. Bumper according to any one of the preceding claims, **characterised in that** the part (11) comprises, at its end having the larger cross section, a fixing plate (14) for fixing to the corresponding side member (2).

5. Bumper according to any one of the preceding claims, **characterised in that** the end of the part (11) having the smaller cross section bears on the beam (1).

6. Bumper according to any one of the preceding claims, **characterised in that** at least one part (11) is provided with a hooking member (19) for towing the vehicle.

7. Bumper according to any one of the preceding claims, **characterised in that** the hooking member (20) is removably fixed to the end of the part (11) having the smaller cross section by connecting means (20).

8. Bumper according to claim 7, **characterised in that** the connecting means (20) comprise, on the one hand, a spacer (21) mounted inside the part (13) and comprising a shoulder (21b) bearing on the transverse connecting wall (17) between the step (14a) with the smallest cross section and the adjacent step (14b) and, on the other hand, a socket (22) fixed to the shoulder (21b) and to the transverse end wall (18) of the step (14a) with the smallest cross section.

9. Bumper according to claim 8, **characterised in that** the socket (22) has a screw thread for receiving a threaded end of the hooking member (11).

10. Bumper according to claims 1 and 2, **characterised in that** the beam (1) comprises, in alignment with each part (11), a recess (4) the width of which, along the axis of the vehicle, is less than or equal to the residual peripheral thickness of the part (11) in its compressed state after impact.

11. Bumper according to claim 6, **characterised in that** each counter-piece (3) is deformable by a force less than the deformation force for the corresponding part (11).

12. Bumper according to any one of the preceding claims, **characterised in that** the part (11) is made of steel and produced by stamping.
